(19) Europäisches Patentamt

European Patent Office

Office européen des brevets

(11) **EP 1 447 122 B1**

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(21) Anmeldenummer: **04002782.3**

(22) Anmeldetag: **09.02.2004**

(51) Int Cl.:
*B01D 47/02* *(2006.01)*      *B01D 47/00* *(2006.01)*
*B01D 45/10* *(2006.01)*      *B01D 53/14* *(2006.01)*
*B01D 3/14* *(2006.01)*

(54) **Verfahren und Vorrichtung zur Reduzierung des aerosolbedingten Austrages aus einer Trennkolonne**

Method and apparatus for reducing aerosol entrainment from a separation column

Procédé et appareil pour la réduction d'aérosols entraînés d'une colonne de séparation

(84) Benannte Vertragsstaaten:
**AT BE BG CH CY CZ DE DK EE ES FI FR GB GR HU IE IT LI LU MC NL PT RO SE SI SK TR**

(30) Priorität: **11.02.2003 DE 10305578**

(43) Veröffentlichungstag der Anmeldung:
**18.08.2004 Patentblatt 2004/34**

(73) Patentinhaber: **BASF Aktiengesellschaft**
**67056 Ludwigshafen (DE)**

(72) Erfinder:
• **Huber, Günther, Dr.**
  **67117 Limburgerhof (DE)**
• **Hölemann, Karl, Dr.**
  **68199 Mannheim (DE)**
• **Löning, Jan-Martin, Dr.**
  **67251 Freinsheim (DE)**
• **Sachweh, Bernd Dr.**
  **67149 Meckenheim (DE)**

(74) Vertreter: **Isenbruck, Günter**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
DE-A- 2 904 143          FR-A- 1 074 603
US-A- 4 348 373          US-A- 5 660 615
US-B1- 6 312 503

EP 1 447 122 B1

**Beschreibung**

Die Erfindung betrifft ein Verfahren zur Reduzierung des aerosolbedingten Austrages aus einer Trennkolonne, eine Vorrichtung sowie eine Verwendung.

Als Aerosole werden thermodynamisch stabile Suspensionen von festen oder flüssigen Partikeln in Gasen bezeichnet, wobei als oberer Grenzwert für den Partikeldurchmesser in der Regel ein Wert von etwa 10 $\mu$m angegeben wird.

Die Bildungsmechanismen von Aerosolen sind in der Literatur ausführlich beschrieben, beispielsweise in K. Schaber: Chem. Eng. Sci., 1995 (50), 8, 1347 bis 1360. Hierzu zählen insbesondere die Bildung durch Gasphasenreaktionen, durch Desublimation oder durch Unterschreitung der Taupunktsgrenze und anschließender Kondensation an homogenen oder heterogenen Keimen. Während Reaktionsaerosole durch die gezielte Beeinflussung der Gaszusammensetzung unterdrückt werden können, ist die Bildung von Kondensationsaerosolen in feucht betriebenen Apparaten, beispielsweise in Gaswäschern, vielfach zwangsläufig. Sie ist in der Regel nur apparativ zu beeinflussen, da in technischen Prozessen lokale Gasphasenübersättigungen sowie das Einbringen von Kondensationskeimen üblicherweise nicht vermieden werden können.

In herkömmlichen Füllkörperschüttungen lassen sich größere Tropfen, ab etwa 10 $\mu$m, abscheiden. Eine Verschiebung der Abscheidekurven in den Feinbereich der Tröpfchen ist jedoch nur durch zunehmende Anströmgeschwindigkeit oder eine deutliche Verlängerung der Füllkörperschüttung und somit zunehmenden Druckverlust möglich. Wegen des großen Druckverlustes bzw. hohen apparativen Aufwandes bei hohen Geschwindigkeiten erscheint es daher nach A. Bürkholz: Chem.-Ing.-Tech. 1976 (48), 9, 795 unzweckmäßig, herkömmliche Füllkörperschüttungen zur Abscheidung feiner Nebel unterhalb von ca. 2 $\mu$m einzusetzen.

Gleiches gilt auch für Drahtgestrick-Tropfenabscheider sowie für weitere herkömmliche Tropfenabscheider, wie Zyklone oder Umlenkabscheider, die alle auf dem Prinzip der Trägheitsabscheidung basieren.

Erst in Venturiwäschern oder Diffusionsabscheidem werden die erforderlichen Trenngrenzen zur Aerosolabscheidung erreicht, jedoch unter Inkaufnahme von erhöhten Investitions- und Betriebskosten.

Es ist möglich, die Bildung von Kondensationsaerosolen in Trennkolonnen durch eine geeignete Verfahrensführung, und zwar insbesondere durch Erhöhung der Betriebstemperatur zu vermeiden. Durch höhere Temperaturen kann der Sättigungsgrad der Gasphase reduziert und eine Unterschreitung der Taupunktslinie durch den Temperatur-Zusammensetzungs-Pfad der Trennoperation verhindert werden. Ein Betrieb bei erhöhten Temperaturen ist nicht in jedem Fall zielführend, da Übersättigungen sich damit nicht an jeder Stelle verhindern lassen, die Gaslöslichkeit der abzutrennenden Komponenten in der Regel mit steigender Temperatur verschlechtert wird und erhöhte Werkstoffbeanspruchungen (zum Beispiel beim Einsatz von Kunststoffen bei der Absorption von Chlorwasserstoff) auftreten.

Aus H. C. Reijnen: Abscheidung von Feinstaerosolen in Chemie Anlagen Verfahren 1988, August, Seiten 12 und 13 ist ein Mehrstufen-Verfahrenssystem für Rauchgasentschwefelungen von Kohlenkraftwerken und Müllverbrennungsanlagen bekannt, mit Vorabscheidung von Aerosolen größer als 3 $\mu$m in einer ersten Stufe, Bedüsung mit Wasser/Dampf bzw. Luft in einer zweiten Stufe zwecks Aerosolwachstum von einer Partikelgröße von 0,1 $\mu$m auf 0,8 bis 1,0 $\mu$m, einer dritten Koaleszierstufe, wobei unter Flutungsbedingungen eine Aerosolagglomeration von einer Partikelgröße von 0,8 bis 1 $\mu$m auf 10 bis 12 $\mu$m erreicht wird und eine Endabscheidung von Tropfen in einer vierten Stufe, wobei Tropfen größer als 10 bis 12 $\mu$m abgeschieden werden. Das Verfahren beschreibt ausschließlich die Abscheidung von Reaktionsaerosolen.

Ein Verfahren gemäß Oberbegriff von Anspruch 1 ist in US-A-5 660 615 offenbart.

Im Zuge der Verschärfung der Immissionsschutzvorschriften müssen neu zu genehmigende Apparate und Anlagen gesteigerten Anforderungen bezüglich der Schadstoffemission genügen. So wird beispielsweise durch die aktuelle TA (Technische Anleitung)-Luft der zulässige Staubwert von 50 mg/m$^3$ auf 20 mg/m$^3$ abgesenkt. Zusätzlich können bei bereits bestehenden Anlagen Emissionsbegrenzungen durch nachträgliche Anordnungen erforderlich werden.

Es war Aufgabe der Erfindung, ein Verfahren zur Verfügung zu stellen, das es ermöglicht, bestehende Trennkolonnen in wirtschaftlicher Weise dergestalt nachzurüsten, dass sie die neuen Anforderungen an die Luftreinhaltung erfüllen. Es soll insbesondere ein aerosolbedingter Austrag aus Trennkolonnen verringert oder vermieden werden, oder es sollen Wertstoffe gewonnen werden, indem Aerosole in wirtschaftlicher Weise, unter Ausnutzung der wirksamen Trennmechanismen (Trägheit und Diffusion), abgeschieden werden.

Die Lösung besteht aus einem Verfahren zur Reduzierung des aerosolbedingten Austrags aus einer Trennkolonne, in der aus einem gasförmigen oder flüssigen Ausgangsgemisch eine oder mehrere Komponenten an trennwirksamen Einbauten abgetrennt werden, wobei in einer Gasphase in der Trennkolonne Aerosole vorhanden sind oder gebildet werden, wobei man die trennwirksamen Einbauten an einer oder mehreren Trennstellen segmentiert und man die Trennstelle(n) dergestalt bestimmt, dass die Aerosole an der oder den Trennstellen mindestens 50 % ihrer maximalen Partikelgröße aufweisen, wobei unter Partikelgröße der mittlere massenbezogene Durchmesser der Partikelverteilung verstanden wird und wobei man an jeder Trennstelle einen Einbau vorsieht, den man zumindest partiell geflutet betreibt, unter Ausbildung einer kontinuierlichen Flüssigphase zumindest in Teilbereichen des Einbaus, an die die Aerosole gebunden werden.

Durch das erfindungsgemäße Verfahren wird somit eine einfache konstruktive Lösung zur Verfügung gestellt, die einen wirtschaftlichen Weg zur Gestaltung neu zu errichtender Apparate sowie zur Nachrüstung vorhandener Apparate zur Verfügung stellt, wonach Aerosole kostengünstig, unter Ausnutzung der wirksamen Trennmechanismen (Trägheit und Diffusion) abgeschieden werden können.

Unter dem Begriff Trennkolonne werden vorliegend alle Apparate verstanden, die in der Verfahrenstechnik zur Durchführung von thermischen Trennverfahren eingesetzt werden. Hierzu zählen insbesondere Destillationskolonnen, Reaktivdestillationskolonnen, Reaktionskolonnen, Reaktivextraktionskolonnen, Absorptionskolonnen (Gaswäscher), Desorptionskolonnen (Strippkolonnen) Adsorptionskolonnen oder Apparate zur Durchführung von Membrantrennverfahren.

Das erfindungsgemäße Verfahren bezieht sich insbesondere auf die Verbesserung von Absorptionskolonnen, auch als Gaswäscher bezeichnet. Gaswäscher werden in der Verfahrenstechnik in großem Umfang eingesetzt. Es sind in der Regel rohrförmige Apparate mit Innendurchmessern im Bereich von 100 bis 8000 mm, die zur Abtrennung einer oder mehrerer Komponenten aus einem Gasgemisch durch Absorption in eine Waschflüssigkeit eingesetzt werden. Hierbei kann es sich um unerwünschte Komponenten ("luftfremde" Stoffe), in Verfahren zur Luftreinhaltung oder, im Gegenteil, um Wertstoffe handeln. Zur Verbesserung des Stoff- und Wärmeaustausches sind Gaswäscher mit trennwirksamen Einbauten, beispielsweise Schüttungen, geordneten Packungen oder Böden ausgestattet.

In Trennkolonnen, insbesondere in Gaswäschern können sich Aerosole, nach allen bekannten Bildungsmechanismen, insbesondere Reaktionsaerosole und/oder Kondensationsaerosole und/oder Sublimationsaerosole bilden. Aerosole können nur zwischenexistent sein, das heißt nur in Teilbereichen des Gaswäschers vorhanden sein.

Erfindungsgemäß werden die vorhandenen trennwirksamen Einbauten der Trennkolonne, insbesondere des Gaswäschers an einer oder mehreren Trennstellen segmentiert, wobei man die Trennstelle(n) dergestalt bestimmt, dass die Aerosole an der oder den Trennstellen mindestens 50 % ihrer maximalen Partikelgröße aufweisen.

Unter Partikelgröße wird vorliegend der mittlere massenbezogene Durchmesser einer Partikelverteilung verstanden, wie er z.B. in Löffler, "Staubabscheiden", Thieme-Verlag Stuttgart, 1988, S. 9, Gleichung (1.20) definiert ist. Der mittlere massenbezogene Durchmesser ist die kubische Wurzel aus dem dritten Moment $M_{3,0}$ der Partikelverteilung. Die messtechnische Bestimmung von Partikelverteilungen erfolgt, mit für den Fachmann bekannten größenauflösenden Messverfahren.

Es ist dem Fachmann bekannt, wie er die Aerosol-Partikelgrößen in Trennkolonnen berechnen kann: Durch eine segmentweise Berechnung des gekoppelten Stoff- und Wärmeübergangs kann ein Temperatur- und Konzentrationsprofil für eine Trennkolonne im Gegen- und Gleichstrom berechnet werden. Für eine im Gegenstrom betriebene Kolonne kann beispielsweise der kommerziell erhältliche Stoff-Wärmeübergangssimulator "ASPEN RA-TEFRAC®" (Hersteller: ASPEN Technology, Cambridge, Mass., USA) verwendet werden. Hierzu wird die Kolonne rechnerisch in einzelne axiale Segmente unterteilt und in jedem Segment i die Partikeldrücke $p_1$ der gasförmigen Komponenten berechnet.

In den einzelnen Segmenten stehen die Gas- und Flüssigphase jedoch nicht im Gleichgewicht. Man herhält daher die Partialdrücke der kondensierbaren Komponenten für die nicht im Gleichgewicht befindliche Gasphase

$\sum P_j^\infty$ , wobei j eine Laufvariable für die Anzahl der verschiedenen dampfförmigen Komponenten darstellt.

Im Rahmen des erfindungsgemäßen Verfahren wird nun für die Gasphase eine isotherme Gleichgewichtsstufe für den Kondensationsvorgang berechnet. Aus dieser Berechnung erhält man die Partialdrücke der kondensierbaren Komponenten im isothermen Gleichgewicht $\sum P_{j,Glw}^\infty$. Aus den Ergebnissen für die isotherme Kondensation der Gasphase lässt sich der Sättigungsgrad $S_i$ für jedes einzelne Kolonnensegment nach Gleichung (1) berechnen.

$$S_i = \frac{\sum P_j^\infty}{\sum P_{j,Glw}^\infty} \qquad\qquad (1)$$

Mit den so berechneten Sättigungsgraden $S_1$ kann nun in einem ersten Schritt abgeschätzt werden, ob ein Partikel bestimmter Größe und bestimmter Benetzungseigenschaften durch Kondensation anwachsen kann.

Eine solche Abschätzung kann anhand der bekannten Gleichungen zur Beschreibung des Zusammenhangs zwischen dem Sättigungsgrund $S^*$ und dem Partikelradius $R_P^*$ im Gleichgewichtszustand (Symbol-Zeichen * = Gleichgewichtszustand) erfolgen. Für ein vollständig benetzbares Partikel kann dieser Zusammenhang beispielsweise mit Hilfe der sogenannten Kelvin-Gleichung

$$In\ S^* = \frac{2\sigma_{gl}V_1^{'}}{kTR_p^*} \qquad (2)$$

beschrieben werden. Hierbei beschreibt $\sigma_{gl}$ die Oberflächenspannung der Flüssigkeit gegen das Gas, $v_1^{'}$ das Molekülvolumen, k die Boltzmann-Konstante und T die Temperatur.

Für vollständig benetzbare Partikel, die zusätzlich gelöste Komponenten (zum Beispiel Salze) enthalten, sowie für schlecht benetzbare Partikel stehen entsprechende Zusammenhänge zur Verfügung. Hierzu wird auf die Habilitationsschrift "Messen, Konditionieren und Abscheiden feinster Aerosolpartikel von Dr.-Ing. habil. Bernd A. Sachweh, Fachbereich Maschinenbau und Verfahrenstechnik der Universität Kaiserslautern, 1996 (dort Gleichungen 2-14a und 2-18) verwiesen.

Ist der tatsächliche Sättigungsgrad S größer als er entsprechende Gleichgewichtswert S*, so kann prinzipiell eine Kondensation an den als Keimen wirkenden Partikeln erfolgen. Dieser Vorgang wird als Aktivierung der Partikel bezeichnet. Ist der tatsächliche Sättigungsgrad dagegen kleiner als der entsprechende Gleichgewichtswert S*, so können die Partikel durch Verdampfung in ihrer Größe schrumpfen. Der Gleichgewichtswert S* wird daher als kritischer Sättigungsgrad, der zugehörige Partikelradius als kritischer Partikelradius $R_p^*$ bezeichnet.

Die Berechnung des kritischen Sättigungsgrades S* als Funktion des Partikelradius gemäß Gleichung (2) oder gemäß der entsprechenden Gleichungen für Partikel mit gelösten Komponenten bzw. für schlecht benetzbare Partikel führt zu sogenannten Köhler-Kurven, welche schließlich eine Abschätzung darüber erlauben, ob Partikel bestimmter Größe und bestimmter Benetzungseigenschaften durch Kondensation anwachsen können. Wie in der erwähnten Habilitationsschrift dargestellt, zeigt sich, dass zur Aktivierung von Partikeln kleiner 50 nm, unabhängig von deren Benetzungseigenschaften, eine kritische Übersättigung erforderlich ist, die exponentiell mit abnehmender Partikelgröße ansteigt. Wird eine -Kondensation angestrebt, so sollte der Sättigungsgrad daher so eingestellt werden, dass Partikel größer als 50 nm zur Keimbildung beitragen können. Kleinere Partikel sind für die Keimbildung nicht zu berücksichtigen, da diese gleichzeitig nur in vernachlässigbarem Maße zum Partikelmassenaustrag aus einer Kolonne beitragen.

In einem zweiten Rechenschritt ist darüber hinaus der zeitliche Ablauf des Partikelwachstums durch die Kondensation zu beschreiben. Damit kann schließlich ermittelt werden, auf welche Größe die Partikel in Abhängigkeit von ihrer Verweilzeit im Apparat anwachsen können.

Hierzu wird in einem weiteren Rechenprogramm die Information über die segmentabhängigen Sättigungsgrade $S_i$ mit Hilfe einer oder mehrerer weiterer Gleichungen dazu benutzt, um das Partikelwachstum über die Zeit t zu beschreiben. Dieses kann beispielsweise mit Hilfe der Gleichung (3) erfolgen.

$$\frac{dR_P}{dt} = \frac{S-1}{p_1 R_P}\left[\frac{L^2}{\lambda_L R_v T_\infty^2} + \frac{p-S\,p_{vs}(T_\infty)}{pD_{vg}P_{vs}(T_\infty)}\right]^{-1}, \qquad (3)$$

worin S den Sättigungsgrad $p_1$ die Dichte der Partikel (Flüssigkeit), L die latente Kondensationswärme $\lambda_L$ die Wärmeleitfähigkeit des umgebenden Mediums, $R_v$ die Gaskonstante des Dampfes, p den Gesamtdruck der Gasphase in der Trennkolonne, $D_{vg}$ die Diffusionskonstante des Dampfes im Umgebungsmedium, $p_{vs}$ den Partialdruck des Dampfes im Sättigungszustand und $T_\infty$ die Temperatur des umgebenden Mediums in unendlicher Entfernung von der Partikeloberfläche beschreiben. Entsprechende Gleichungen, die eine Berücksichtigung der gekrümmten Oberfläche der Partikel sowie von gelösten, nicht verdampfenden Komponenten (zum Beispiel Salze) auf den Kondensationsvorgang erlauben, sind in der bereits vorstehend zitierten Habilitationsschrift "Messen, Konditionieren und Abscheiden feinster Aerosolpartikel" von Dr. -Ing. habil. Bernd A. Sachweh, Fachbereich Maschinenbau und Verfahrenstechnik der Universität Kaiserslautern, 1996 (dort Gleichungen 2-37 und 2-38) beschrieben.

Mit dieser Vorgehensweise ist es nun möglich, den Verlauf der Partikelgröße über die Kolonnenhöhe segmentweise zu berechnen und somit die optimale Position zur Zwischenabscheidung der Aerosole zu bestimmen.

Erfindungsgemäß wird an der oder den Trennstellen, die wie oben beschrieben berechnet wurden, ein Einbau bzw. Einbauten vorgesehen, die in einem zumindest partiell gefluteten Betriebszustand betrieben werden. Unter dem Begriff partiell geflutet wird verstanden, dass in Teilbereichen des Einbaus, die nicht zusammenhängend sein müssen, eine kontinuierliche Flüssigphase erzwungen wird.

Es ist beispielsweise aus DE-A 199 36 380 bekannt, Kolonneneinbauten zur Verbesserung der Stoff- und Wärmetransportvorgänge gezielt im gefluteten Zustand zu betreiben. Maßgeblich hierfür ist die Geometrie der Einbauten sowie die eingestellten Flüssigkeits- und Gasmengen durch die Einbauten. Der Mechanismus des Flutens lässt sich phänomenologisch durch zwei Vorgänge veranschaulichen: zum einen wird der an den Einbauten abfließende Flüssigkeitsfilm aufgestaut und zum anderen werden vom Gasstrom nach oben mitgeführte Flüssigkeitstropfen aufgestaut.

Bevorzugt bestimmt man die Trennstelle(n) dergestalt, dass die Aerosole dort mindestens 80 % ihrer maximalen Partikelgröße aufweisen. Besonders bevorzugt bestimmt man die Trennstelle(n) dergestalt, dass die Aerosole dort mindestens 90 % ihrer maximalen Partikelgröße aufweisen.

In einer bevorzugten Verfahrensvariante werden die trennwirksamen Einbauten an einer einzigen Trennstelle segmentiert.

Der Einbau bzw. die Einbauten an der oder den Trennstellen kann den gesamten Innendurchmesser der Trennkolonne ausfüllen, es ist jedoch auch möglich, den Einbau (die Einbauten) in der Weise auszubilden, dass er (sie) den Innendurchmesser der Trennkolonne nur teilweise ausfüllt (ausfüllen). Dies kann insbesondere vorteilhaft sein, um einen zumindest partiell gefluteten Betriebszustand des Einbaus aufgrund der höheren Gasgeschwindigkeit durch den Einbau einfacher zu bewirken.

Bezüglich der konkreten konstruktiven Ausgestaltung des Einbaus gibt es grundsätzlich keine Einschränkungen. Möglich sind beispielsweise Füllkörperschüttungen, wobei die Füllkörper grundsätzlich jede Geometrie annehmen können, strukturierte Packungen, Böden, die mit einer Sprudelschicht betrieben werden sowie Gestricke, Gewirke oder Vliese aus Metallen, Kunststoffen oder Glas.

Bevorzugt werden Einbauten mit spezifischen Oberflächen im Bereich von 60 bis 2500 $m^2/m^3$ und Porositäten im Bereich von 85 bis 98 %, bevorzugt von 91 bis 96 %.

Es ist vorteilhaft, vor dem Einbau (den Einbauten) einen externen Gas-, Dampf- und/oder Flüssigkeitsstrom in die Trennkolonne einzuleiten, um den zu reinigenden Gasstrom zu sättigen oder zu übersättigen.

In einer vorteilhaften Ausführungsform kann über eine externe Flüssigkeitszu- und/oder - abführung ein vom Gasstrom unabhängiger, definierter Druckverlust über den Einbau erzeugt werden. Vorteilhaft ist ein Druckverlust über dem Einbau im Bereich von 0 bis 200 mbar, bevorzugt im Bereich von 5 bis 40 mbar.

Die zumindest partielle Flutung des Einbaus kann über die in der Trennkolonne zur Absorption geführte Waschflüssigkeit, über Flüssigkeitstropfen, die vom Gasstrom in den Einbau miteingetragen werden, erzeugt werden. Möglich ist auch eine externe Flüssigkeitszufuhr zum Einbau, wobei die extern zugeführte Flüssigkeit dieselbe Zusammensetzung wie die Waschflüssigkeit hat oder hiervon verschieden sein kann.

Bevorzugt werden Höhen der Einbauten im Bereich von 100 bis 500 mm.

Das Verfahren ist nicht eingeschränkt bezüglich der Stromführung von zu reinigendem Gasgemisch und Waschflüssigkeit; Gleich- und Gegenstromfahrweise sind gleichermaßen möglich.

Das Verfahren ist nicht eingeschränkt bezüglich Betriebsdruck- und Temperatur. Möglich ist ein Betrieb bei Atmosphärendruck, bei Unter- oder Überdruck, mit oder ohne äußerer Wärmezu- und -abführung.

Das erfindungsgemäße Verfahren ist besonders geeignet zur Reinigung von Gasgemischen, die zur Bildung von Kondensationsaerosolen neigen, insbesondere von Gasströmen, die gasförmige Halogenwasserstoffe, insbesondere Chlorwasserstoff und/oder Bromwasserstoff, gasförmiges Schwefeltrioxid, gasförmige Schwefelsäure oder gasförmiges Stickstoffdioxid enthalten.

Das erfindungsgemäße Verfahren ist gleichermaßen geeignet zur Reinigung von Gasgemischen, die zur Bildung von Reaktionsaerosolen neigen, insbesondere von Gasgemischen, enthaltend gasförmigen Ammoniak und gasförmigen Chlorwasserstoff. Beispielhaft genannt seien hierzu auch Reaktionsgemische aus Verbrennungsvorgängen.

Eine weitere vorteilhafte Verwendung betrifft die Reinigung von Gasgemischen, die zur Bildung von Sublimationsaerosolen neigen.

Die gefundene Lösung weist gegenüber bekannten Verfahren zur Vermeidung des aerosolbedingten Austrages aus Trennkolonnen sowohl technische als auch wirtschaftliche Vorteile auf.

Sie kann als einfache Nachrüstmaßnahme in bereits vorhandene Trennkolonnen, insbesondere Gaswäscher eingebracht werden, ohne dass hierfür zusätzliche Betriebsmittel oder eine Änderung der Betriebsparameter zur Einhaltung der Emissionsgrenzen erforderlich wären.

Gegenüber Venturiwäschem oder Tiefbettdiffusionsfiltern weist die gefundene Lösung günstigere Betriebs- und/oder Investitionskosten auf.

Darüber hinaus weist das erfindungsgemäße Verfahren eine erhöhte Flexibilität auf, da die Anströmgeschwindigkeit der Gasphase über einen weiten Betriebsbereich ohne deutliche Beeinflussung der Abscheideleistung variiert werden kann, indem die Flüssigkeitsdosierung zum zumindest partiell gefluttet betriebenen Einbau extern, beispielsweise über eine Differenzdruckmessung, geregelt wird.

Ein weiterer Vorteil des erfindungsgemäßen Verfahrens besteht darin, dass die Betriebstemperatur niedrig ist, was den Absorptionsvorgang zahlreicher Gaskomponenten in eine wässrige Waschlösung erheblich verbessert.

Die niedrigen Betriebstemperaturen sind insbesondere beim Einsatz von korrosiven Stoffsystemen, beispielsweise von halogenwasserstoffhaltigen Gemischen, vorteilhaft, da die Werkstoffbeanspruchung dadurch geringer ist. Darüber hinaus ist durch eine Kreislauffahrweise in Verfahren zur Absorption von Halogenwasserstoffen, insbesondere Chlorwasserstoff, enthaltenden Gasgemischen die Herstellung hochkonzentrierter Halogenwasserstoffsäurelösungen, insbesondere hochkonzentrierter Salzsäure-Lösungen, möglich.

Die Erfindung wird im Folgenden anhand einer Figur sowie von Anwendungsbeispielen näher erläutert.

Es zeigen im Einzelnen:

Figur 1 eine erste bevorzugte Ausführungsform eines Gaswäschers zur Durchführung des erfindungsgemäßen Verfahrens,

Figur 2 einen Ausschnitt aus einer weiteren bevorzugten Ausführungsform eines Gaswäschers zur Durchführung des erfindungsgemäßen Verfahrens und

Figur 3 die graphische Darstellung der Versuchsergebnisse zur Bestimmung der Reinigungsleistung eines Gaswäschers nach dem Stand der Technik mit Gegenüberstellung von Gaswäschern nach dem erfindungsgemäßen Verfahren.

In den Figuren bezeichnen gleiche Bezugszeichen gleiche oder entsprechende Merkmale.

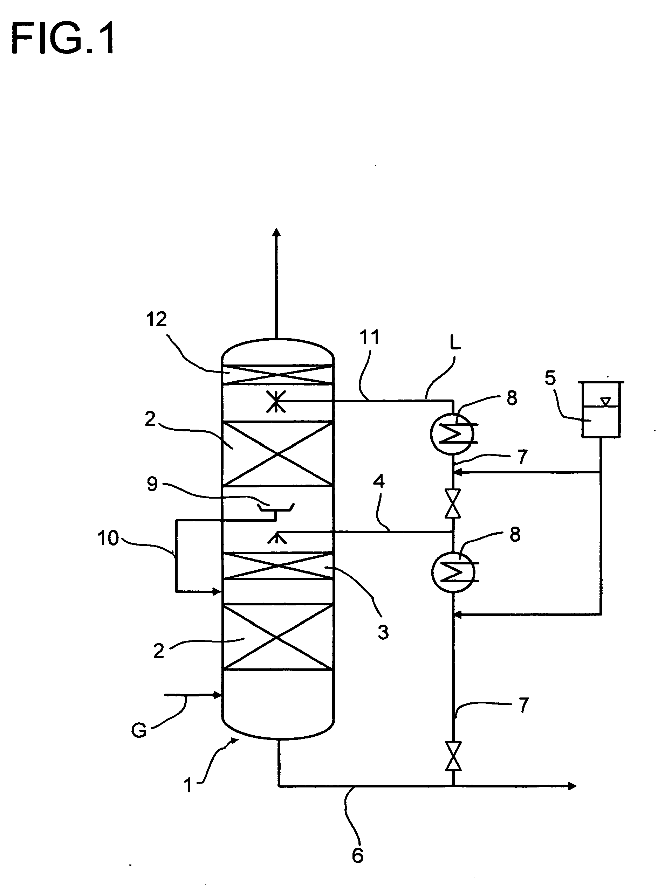

Die schematische Darstellung in Fig. 1 zeigt einen Gaswäscher 1, dem im unteren Bereich desselben, das gasförmige Ausgangsgemisch G und im Gegenstrom hierzu die Waschflüssigkeit L zugeführt und an herkömmlichen trennwirksamen Einbauten 2 miteinander in Kontakt gebracht werden. In Abhängigkeit vom Temperatur-, Druck- und Zusammensetzungsprofil im Gaswäscher 1 kann im unteren, mit trennwirksamen Einbauten 2 ausgestatteten Bereich desselben eine Aerosolbildung durch Gasphasenreaktion und/oder Kondensation und/oder Desublimation stattfinden. Der aerosolbeladene Gasstrom aus diesem Bereich des Gaswäschers strömt anschließend durch einen Einbau 3, der partiell oder vollständig geflutet betrieben wird. Dies ist beispielsweise möglich, indem dem Einbau 3 Waschflüssigkeit aus dem darüber befindlichen Bereich des Gaswäschers 1 oder über eine externe Zuleitung 4 zugeführt wird. Die extern zugeführte Flüssigkeit kann aus einem Behälter für Waschflüssigkeit 5 oder aus dem Sumpfablauf 6 des Gaswäschers 1 über eine Rückführungsleitung 7 und einen Wärmetauscher 8 zugeführt werden.

Es ist auch möglich, im Gaswäscher 1 ablaufende Waschflüssigkeit oberhalb des Einbaus 3 in einem Flüssigkeitssammler 9 aufzufangen und über eine interne oder externe Flüssigkeitsleitung 10 am Einbau 3 vorbei in den unteren Abschnitt des Gaswäschers zu führen. In dieser Ausführungsform wird der Einbau 3 durch vom aufsteigenden Gasstrom mitgeführte Flüssigkeit in Form von Tropfen oder Kondensat befeuchtet.

Der aerosolbeladene Gasstrom wird nach Durchströmen des Einbaus 3 auf einen zweiten, mit herkömmlichen trennwirksamen Einbauten 2 bestückten Abschnitt des Gaswäschers 1 gegeben, wobei die trennwirksamen Einbauten 2 in diesem Apparateabschnitt sowohl trocken als auch über eine externe Zuleitung 11 mit Waschflüssigkeit zur weiteren absorptiven Abreicherung beaufschlagt betrieben werden können. Die Waschflüssigkeit kann ebenfalls dem Behälter 5 oder dem Sumpfablauf 6 des Gaswäschers über eine Rückführung 7 und einem Wärmetauscher 8 zugeführt werden. Am Kolonnenkopf ist vorteilhaft ein Tropfenabscheider 12 vorgesehen, um den Mitriss von groben Tropfen (Partikeldurchmesser >> 10 $\mu$m) im gereinigten Gasstrom, der am Kolonnenkopf abgezogen wird, zu vermeiden. Die beladene Waschflüssigkeit wird über den Sumpfablauf des Gaswäschers 1 abgezogen.

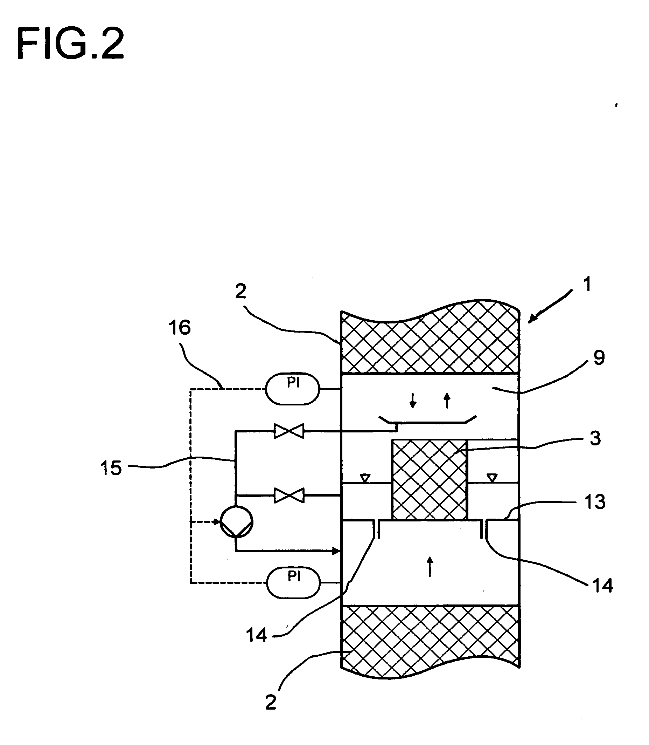

Fig. 2 zeigt einen Ausschnitt aus einer weiteren bevorzugten Ausführungsform eines Gaswäschers 1 zur Durchführung des erfindungsgemäßen Verfahrens, wobei der Einbau 3, der partiell oder vollständig geflutet betrieben wird und zwischen zwei Bereichen mit herkömmlichen trennwirksamen Einbauten 2 angeordnet ist, und der einen im Vergleich zum Innendurchmesser des Gaswäschers 1 geringeren Durchmesser aufweist. Der Einbau 3 ist im Gaskamin eines Tunnelbodens 13 angeordnet, auf dem in der in Fig. 2 dargestellten besonderen Ausführungsform Flüssigkeit bis zu einer bestimmten Höhe bezogen auf den Einbau 3 aufgestaut ist. Die Waschflüssigkeit wird über Abläufe 14 vom Tunnelboden 13 in den unteren Bereich des Gaswäschers 1 geleitet. Alternativ hierzu kann auch Waschflüssigkeit über eine externe Leitung 15 mit Absperr- und Fördereinrichtungen in den unteren Bereich des Gaswäschers 1 abgeführt werden. Der abgezogene Flüssigkeitsstrom kann über eine Differenzdruckmessung 16 geregelt werden, wodurch am Einbau 3 ein definierter Druckabfall eingestellt werden kann.

**Anwendungsbeispiele**

In einer Versuchsapparatur, die entsprechend der schematischen Darstellung in Fig. 2 aufgebaut war, wurde die Wirksamkeit des erfindungsgemäßen Verfahrens im Stoffsystem Wasser, Chlorwasserstoff, Stickstoff untersucht. Die Versuchsapparatur bestand aus einem Gaswäscher mit einem Innendurchmesser von 100 mm, mit zwei Füllkörperschüttungen von je 500 mm Länge aus handelsüblichen Kunststofffüllkörpern und zwar Hiflow® -Ringen der Fa.

Rauschert mit einer spezifischen Oberfläche von 313 m$^2$/m$^3$ und einer Porosität (Lückengrad) von 91 %. Zwischen den beiden Füllkörperschüttungen war ein Einbau eingesetzt, gebildet aus einem Drahtgestrick-Tropfenabscheider aus Kunststoff, mit einer Länge von 150 mm und einem Durchmesser von 50 mm. Es wurden zwei Drahtgestrick-Tropfenabscheider untersucht, die sich durch ihre spezifische Oberfläche und Porosität unterschieden, und zwar ein erster Drahtgestrick-Tropfenabscheider mit einer kleineren spezifischen Oberfläche, von 555 m$^2$/m$^3$ und eine Porosität von 95,5 %, und ein zweiter Drahtgestrick-Tropfenabscheider mit einer größeren spezifischen Oberfläche, von 615 m$^2$/m$^3$ und einer Porosität von 93,8 %. Der erste Einbau wurde partiell geflutet betrieben, der Druckverlust über den Einbau betrug 10 mbar. Der zweite Einbau wurde vollständig geflutet betrieben, der Druckverlust betrug 20 mbar.

Die Versuchsapparatur wurde bei Umgebungsdruck isotherm betrieben.

Als Waschflüssigkeit wurde ein 1 Gew.-%ige wässrige Salzsäurelösung eingesetzt, die auf eine Temperatur von 22°C temperiert wurde. Die Flüssigkeitsbelastung der Kolonne betrug 18 m$^3$/m$^2$/h.

Der trockene zu reinigende Gasstrom von 14,6 Nm$^3$/h Stickstoff wurde der Waschkolonne mit einer konstanten Chlorwasserstoff-Konzentration von 3100 Vol.-ppm und einer Eintrittstemperatur von 25°C zugeführt.

Dem zu reinigenden Gasstrom wurden feine feste Ammoniumchlorid-Partikel in einem Konzentrationsbereich von 10$^5$ bis 4,5 · 10$^7$ Partikel/cm$^3$ als Kondensationskeime für die Aerosolbildung zugegeben. Die Größenordnung der Keime kann mit 0,05 bis 1 $\mu$m abgeschätzt werden (vgl. K. Schaber: Chem. Eng. Sci., 1995(50), 8, S. 1347, Tabelle 1).

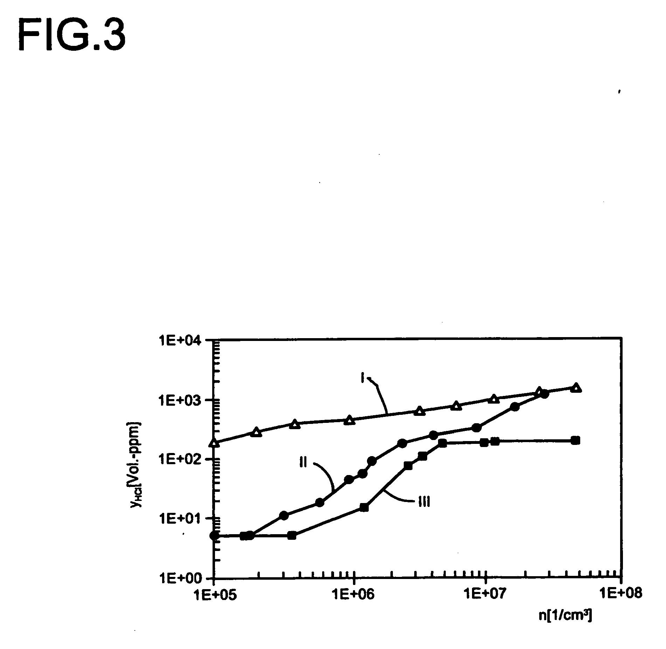

Die doppelt logarithmische Darstellung in Fig. 3 zeigt die Restgehalte an Chlorwasserstoff im gereinigten Gasstrom, $y_{HCl}$, in Vol.-ppm in Abhängigkeit von der Partikelanzahl n im zu reinigenden Gasstrom, in 1/cm$^3$, für jeweils einen Gaswäscher nach dem Stand der Technik (Kurve I, mit Dreiecken markiert), sowie für einen erfindungsgemäßen Gaswäscher, mit einem partiell geflutet betriebenen Einbau (Kurve II, die Messpunkte sind als Kreise dargestellt) bzw. mit einem geflutet betriebenen Einbau (Kurve III, die Messpunkte sind als Quadrate dargestellt).

Die Versuchsergebnisse zeigen, dass durch den erfindungsgemäßen Einsatz eines zumindes partiell geflutet betriebenen Einbaus im gesamten Partikelkonzentrationsbereich die Chlorwasserstoffkonzentration im gereinigten Gasstrom reduziert wird. Als besonders effektiv erwies sich der Betrieb mit einem vollständig gefluteten Einbau, der im technisch relevanten Keimzahlbereich bis 10$^6$ Partikel/cm$^3$ zu einem gereinigten Gasstrom mit weniger als 30 Vol.-ppm Chlorwasserstoff führte.

**Patentansprüche**

1. Verfahren zur Reduzierung des aerosolbedingten Austrags aus einer Trennkolonne (1), in der aus einem gasförmigen oder flüssigen Ausgangsgemisch (G) eine oder mehrere Komponenten an trennwirksamen Einbauten (2) abgetrennt werden, wobei in der Gasphase in der Trennkolonne (1) Aerosole vorhanden sind oder gebildet werden, wobei man die trennwirksamen Einbauten (2) an einer oder mehreren Trennstellen segmentiert und an jeder Trennstelle einen Einbau (3) vorsieht, **dadurch gekennzeichnet, dass** man die eine oder die mehreren Trennstellen dergestalt bestimmt, dass die Aerosole an der oder den Trennstellen mindestens 50 % ihrer maximalen Partikelgröße aufweisen, wobei unter Partikelgröße der mittlere massenbezogene Durchmesser der Partikelverteilung verstanden wird und dass man den Einbau (3) zumindest partiell geflutet betreibt, wobei zumindest in Teilbereichen des Einbaus (3) eine kontinuierliche Flüssigphase erzwungen wird, an die die Aerosole gebunden werden.

2. Verfahren nach Anspruch 1, **dadurch gekennzeichnet, dass** man die Trennstelle oder die Trennstellen an der Stelle oder an den Stellen vorsieht, an der oder an den die Aerosole mindestens 80 %, bevorzugt mindestens 90 % ihrer maximalen Partikelgröße aufweisen.

3. Verfahren nach Anspruch 1 oder 2, **dadurch gekennzeichnet, dass** man die trennwirksamen Einbauten (2) an einer Trennstelle segmentiert.

4. Verfahren nach einem der Ansprüche 1 bis 3, **dadurch gekennzeichnet, dass** der zumindest partiell geflutet betriebene Einbau oder die zumindest partiell geflutet betriebenen Einbauten (3) den Innendurchmesser der Trennkolonne (1) nur teilweise ausfüllen.

5. Verfahren nach einem der Ansprüche 1 bis 4, **dadurch gekennzeichnet, dass** der zumindest partiell geflutet betriebene Einbau oder die zumindest partiell geflutet betriebenen Einbauten (3) eine Füllkörperschüttung, eine strukturierte Packung, ein mit Sprudelschicht mit kontinuierlicher flüssiger und disperser gasförmiger Phase betriebener Boden oder ein Gestrick, Gewirk oder Vlies aus Metall, Kunststoff oder Glas sind.

6. Verfahren nach einem der Ansprüche 1 bis 5, **dadurch gekennzeichnet, dass** die spezifische Oberfläche des zumindest partiell geflutet betriebenen Einbaus oder der zumindest partiell geflutet betriebenen Einbauten (3) im Bereich von 60 bis 2500 m2/m3 und die Porosität im Bereich von 85 bis 98 %, bevorzugt im Bereich von 91 bis 96 %, liegt.

7. Verfahren nach einem der Ansprüche 1 bis 6, **dadurch gekennzeichnet, dass** man der Trennkolonne (1) stromabwärts vor dem zumindest partiell geflutet betriebenen Einbau oder den zumindest partiell geflutet betriebenen Einbauten (3), bezogen auf die Zuführung des gasförmigen oder flüssigen Ausgangsgemisches (G), einen externen Gas-, Dampf- und/oder Flüssigkeitsstrom zuführt, den man dergestalt regelt, dass er die Sättigung oder Übersättigung der Gasphase in der Trennkolonne (1) bewirkt.

8. Verfahren nach einem der Ansprüche 1 bis 7, **dadurch gekennzeichnet, dass** man über eine externe Flüssigkeitszu- und/oder -abführung (4, 10) am zumindest partiell geflutet betriebenen Einbau oder an den zumindest partiell geflutet betriebenen Einbauten (3) einen definierten Druckverlust erzeugt.

9. Verfahren nach Anspruch 8, **dadurch gekennzeichnet, dass** der Druckverlust am zumindest partiell geflutet betriebenen Einbau oder an den zumindest partiell geflutet betriebenen Einbauten (3) im Bereich von 0 bis 200 mbar, bevorzugt im Bereich von 5 bis 40 mbar eingestellt wird.

10. Verfahren nach einem der Ansprüche 1 bis 9, **dadurch gekennzeichnet, dass** die Trennkolonne (1) ein Gaswäscher ist, dem man ein gasförmiges Ausgangsgemisch (G) und eine Waschflüssigkeit (L), bevorzugt im Gegenstrom, zuführt.

11. Verwendung eines Verfahrens nach einem der Ansprüche 1 bis 10 zur Reinigung von Gasströmen, die zur Bildung von Kondensationsaerosolen neigen.

12. Verwendung nach Anspruch 11, **dadurch gekennzeichnet, dass** die Gasströme gasförmige Halogenwasserstoffe, insbesondere Chlorwasserstoff und/oder Bromwasserstoff, gasförmiges Schwefeltrioxid, gasförmige Schwefelsäure oder gasförmiges Stickstoffdioxid enthalten, und in Kontakt mit wässrigen Lösungen kommen, insbesondere mit wässrigen Lösungen, die Ionen enthalten, die bei der Absorption der vorgenannten Stoffe in Wasser entstehen.

13. Verwendung eines Verfahrens nach einem der Ansprüche 1 bis 10 zur Reinigung von Gasströmen, die zur Bildung von Reaktionsaerosolen neigen.

14. Verwendung nach Anspruch 13 zur Reinigung von Gasströmen, die gasförmigen Ammoniak und gasförmigen Chlorwasserstoff enthalten.

15. Verwendung eines Verfahrens nach einem der Ansprüche 1 bis 10 zur Reinigung von Gasströmen, die zur Bildung von Sublimationsaerosolen neigen.

## Claims

1. A process for reducing the aerosol-related discharge from a separation column (1) in which one or more components are separated off from a gaseous or liquid starting mixture (G) at actively separating internals (2), aerosols being present or formed in the gas phase in the separation column (1), the actively separating internals (2) being segmented at one or more separation points and an internal (3) being provided at every separation point, which comprises the one or more separation points being determined in such a manner that the aerosols have at least 50% of their maximum particle size at the separation point or separation points, particle size being understood to mean the average diameter of the particle distribution by mass and the internal being operated under at least partially flooded conditions, at least in partial regions of the internal (3) a continuous liquid phase being forced to which the aerosols are bound.

2. The process according to claim 1, wherein the separation point(s) is (are) provided at the point (points) at which the aerosols have at least 80%, preferably at least 90%, of their maximum particle size.

3. The process according to claim 1 or 2, wherein the actively separating internals (2) are segmented at one separation point.

4. The process according to any one of claims 1 to 3, wherein the internal or internals operated under at least partially flooded conditions (3) only partially fill the internal diameter of the separation column (1).

5. The process according to any one of claims 1 to 4, wherein the internal or internals operated under at least partially flooded conditions (3) are a random packing bed, an ordered packing, a tray operated with trickling layer having a continuous liquid and disperse gaseous phase, or a mesh, knitted fabric or nonwoven made of metal, plastic or glass.

6. The process according to any one of claims 1 to 5, wherein the specific surface area of the internal or internals operated under at least partially flooded conditions (3) is in the range from 60 to 2 500 $m^2/m^3$ and the porosity is in the range from 85 to 98%, preferably in the range from 91 to 96%.

7. The process according to any one of claims 1 to 6, wherein an external gas, vapor and/or liquid stream is fed to the separation column (1) downstream before the internal or internals operated under at least partially flooded conditions (3), based on the feed of the gaseous or liquid starting mixture (G), which external stream is controlled in such a manner that it causes the saturation or supersaturation of the gas phase in the separation column (1).

8. The process according to any one of claims 1 to 7, wherein a defined pressure drop is generated at the internal or internals operated under at least partially flooded conditions (3), via an external liquid feed and/or removal (4, 10).

9. The process according to claim 8, wherein the pressure drop at the internal or internals operated under at least partially flooded conditions (3) is set in the range from 0 to 200 mbar, preferably in the range from 5 to 40 mbar.

10. The process according to any one of claims 1 to 9, wherein the separation column (1) is a gas scrubber to which are fed a gaseous starting mixture (G) and a scrubbing liquid (L), preferably in countercurrent.

11. The use of a process according to any one of claims 1 to 10 for purifying gas streams which have a tendency to form condensation aerosols.

12. The use according to claim 11 wherein the gas streams comprise gaseous hydrogen halides, in particular hydrogen chloride and/or hydrogen bromide, gaseous sulfur trioxide, gaseous sulfuric acid or gaseous nitrogen dioxide, and come into contact with aqueous solutions, in particular with aqueous solutions which contain ions produced in the absorption of the abovementioned substances in water.

13. The use of a process according to any one of claims 1 to 10 for purifying gas streams which have a tendency to form reaction aerosols.

14. The use according to claim 13 for purifying gas streams which comprise gaseous ammonia and gaseous hydrogen chloride.

15. The use of a process according to any one of claims 1 to 10 for purifying gas streams which have a tendency to form sublimation aerosols.

**Revendications**

1. Procédé de réduction de l'entraînement d'aérosols d'une colonne de séparation (1), dans laquelle on sépare d'un mélange de départ gazeux ou liquide (G) un ou plusieurs composants sur des éléments encastrés (2) à pouvoir séparateur, des aérosols étant présents ou formés dans la phase gazeuse de la colonne de séparation (1), dans laquelle on segmente les éléments encastrés (2) à pouvoir séparateur en un ou plusieurs points de séparation et l'on prévoit, à chaque point de séparation, un élément encastré (3), **caractérisé en ce que** l'on détermine les un ou multiples points de séparation de manière que les aérosols présent au(x) point(s) de séparation au moins 50% de leur taille particulaire maximale - où l'on entend par taille particulaire le diamètre moyen en masse de la distribution particulaire - et **en ce que** l'on exploite l'élément encastré (3) en le noyant au moins partiellement, une phase liquide continue, à laquelle sont liés les aérosols, étant refoulée au moins dans des zones partielles de l'élément encastré (3).

2. Procédé selon la revendication 1, **caractérisé en ce que** l'on prévoit le ou les points de séparation à l'endroit ou aux endroits où les aérosols présentent au moins 80%, de préférence au moins 90%, de leur taille particulaire maximale.

**3.** Procédé selon la revendication 1 ou 2, **caractérisé en ce que** l'on segmente les éléments encastrés (2) à pouvoir séparateur en un point de séparation.

**4.** Procédé selon l'une quelconque des revendications 1 à 3, **caractérisé en ce que** l'élément encastré (3) exploité au moins partiellement noyé ou les éléments encastrés (3) exploités au moins partiellement noyés remplit ou remplissent seulement en partie le diamètre intérieur de la colonne de séparation (1).

**5.** Procédé selon l'une quelconque des revendications 1 à 4, **caractérisé en ce que** l'élément encastré (3) exploité au moins partiellement noyé ou les éléments encastrés (3) exploités au moins partiellement noyés est ou sont des corps de remplissage en vrac, un garnissage structuré, un plateau exploité avec une couche bouillonnante formée d'une phase liquide continue et d'une phase gazeuse dispersée ou un tricot, un tissu ou un non-tissé en métal, en matériau synthétique ou en verre.

**6.** Procédé selon l'une quelconque des revendications 1 à 5, **caractérisé en ce que** la surface spécifique de l'élément encastré (3) exploité au moins partiellement noyé ou des éléments encastrés (3) exploités au moins partiellement noyés se situe dans une plage de 60 à 2500 m$^2$/m$^3$ et la porosité dans une plage de 85 à 98%, de préférence dans une plage de 91 à 96%.

**7.** Procédé selon l'une quelconque des revendications 1 à 6, **caractérisé en ce que** l'on achemine à la colonne de séparation (1) en aval avant l'élément encastré (3) exploité au moins partiellement noyé ou les éléments encastrés (3) exploités au moins partiellement noyés, par rapport à l'acheminement du mélange de départ gazeux ou liquide (G), un courant de gaz, de vapeur et/ou de liquide externe que l'on règle de manière à provoquer la saturation ou la sursaturation de la phase gazeuse dans la colonne de séparation (1).

**8.** Procédé selon l'une quelconque des revendications 1 à 7, **caractérisé en ce que** l'on instaure une perte de pression définie par acheminement et/ou évacuation de liquide externe (4, 10) sur l'élément encastré (3) exploité au moins partiellement noyé ou sur les éléments encastrés (3) exploités au moins partiellement noyés.

**9.** Procédé selon la revendication 8, **caractérisé en ce que** la perte de pression est réglée sur l'élément encastré (3) exploité au moins partiellement noyé ou sur les éléments encastrés (3) exploités au moins partiellement noyés dans une plage de 0 à 200 mbars, de préférence dans une plage de 5 à 40 mbars.

**10.** Procédé selon l'une quelconque des revendications 1 à 9, **caractérisé en ce que** la colonne de séparation (1) est un épurateur de gaz, auquel on achemine un mélange de départ gazeux (G) et un liquide de lavage (L), de préférence à contre-courant.

**11.** Utilisation d'un procédé selon l'une quelconque des revendications 1 à 10 pour la purification de courants gazeux qui ont tendance à former des aérosols par condensation.

**12.** Utilisation selon la revendication 11, **caractérisée en ce que** les courants gazeux contiennent des halogénures d'hydrogène sous forme gazeuse, en particulier du chlorure d'hydrogène et/ou du bromure d'hydrogène, du trioxyde de soufre sous forme gazeuse, de l'acide sulfurique sous forme gazeuse ou du dioxyde d'azote sous forme gazeuse, et entrent en contact avec des solutions aqueuses, en particulier avec des solutions aqueuses contenant des ions, qui se forment au cours de l'absorption des éléments cités ci-dessus dans de l'eau.

**13.** Utilisation d'un procédé selon l'une quelconque des revendications 1 à 10 pour la purification de courants gazeux qui ont tendance à former des aérosols réactionnels.

**14.** Utilisation selon la revendication 13 pour la purification de courants gazeux contenant de l'ammoniac sous forme gazeuse et du chlorure d'hydrogène sous forme gazeuse.

**15.** Utilisation d'un procédé selon l'une quelconque des revendications 1 à 10 pour la purification de courants gazeux qui ont tendance à former des aérosols par sublimation.

# FIG.1

# FIG.2

# FIG.3